# EUROPEAN PATENT SPECIFICATION

(11) **EP 3 950 497 B1**
(45) Date of publication and mention of the grant of the patent: **22.01.2025**
(21) Application number: 21190133.5
(22) Date of filing: 06.08.2021
(51) Int. Cl.: B64C 29/00, B64D 13/00, B64C 39/02

(54) **VERTICAL TAKEOFF AND LANDING UNMANNED AERIAL VEHICLE AND COOLING SYSTEM FOR UNMANNED AERIAL VEHICLE**
SENKRECHT STARTENDES UND LANDENDES UNBEMANNTES FLUGGERÄT UND KÜHLSYSTEM FÜR EIN UNBEMANNTES FLUGGERÄT
VÉHICULE AÉRIEN SANS PILOTE À DÉCOLLAGE ET ATTERRISSAGE VERTICAUX ET SYSTÈME DE REFROIDISSEMENT POUR VÉHICULE AÉRIEN SANS PILOTE

(30) Priority: 07.08.2020 CN 202021631679 U; 29.10.2020 CN 202022448138 U
(43) Date of publication of application: 09.02.2022
(73) Proprietor: Shanghai Autoflight Co., Ltd., Jinshan District Shanghai 201500 (CN)
(72) Inventor: TIAN, Yu, North Point (HK)
(74) Representative: MERH-IP Matias Erny Reichl Hoffmann Patentanwälte PartG mbB

(56) References cited:
- US-A1- 2018 105 268
- US-A1- 2019 127 056
- US-A1- 2019 233 107

## Description

### TECHNICAL FIELD

The invention relates to the technology of unmanned aerial vehicles, and in particular to a vertical takeoff and landing unmanned aerial vehicle and a cooling system for the unmanned aerial vehicle.

### BACKGROUND

Heat productivity is large during the working period of a lift motor and an electronic speed controller of an existing vertical takeoff and landing unmanned aerial vehicle, but an arm structure of the existing unmanned aerial vehicle is mostly a closed cavity structure which is not conducive to diffusion of hot air. There is generally no heat dissipation for equipment in the arm during the working period of the lift motor and the electronic speed controller of the existing vertical takeoff and landing unmanned aerial vehicle, which causes a certain influence on the equipment in the arm. US 2018/ 105 268 A1 relates to a rotor mounting boom assembly for a personal aircraft. US 2018/ 105 268 A1 solely addresses the cooling of the motor controller and of the controller's sub-components as, advantageously, the motor shall be placed within the hub of the rotor - thus, outside of the rotor mounting boom. US 2019/ 233 107 A1 relates to a flying platform with a canard configuration, however, it does not teach any convective cooling of any component, neither of the motor nor of the motor controller, and it does not teach any cooling air inlet, let alone its specific layout, nor any means to enhance convective cooling. US 2019/ 127 056 A1 relates to an array of rotors for vertical flight positioned on top of support booms featuring a modular water-cooled variable pitch lift powertrain system with an individual coolant pump and heat exchanger for each set of motors and motor controllers used on the aircraft.

### SUMMARY

The invention relates to a vertical takeoff and landing unmanned aerial vehicle and a cooling system for the unmanned aerial vehicle, which are used for solving the problem that an arm of the unmanned aerial vehicle is poor in heat dissipation.

In particular, it is provided a cooling system for an unmanned aerial vehicle, having the features defined in claim 1. Further, it is provided a vertical takeoff and landing (VTOL) unmanned aerial vehicle, having the features defined in claim 6. Further preferred embodiments are defined in the dependent claims.

According to the vertical takeoff and landing unmanned aerial vehicle provided by the invention, heat dissipation in an arm of an unmanned aerial vehicle is achieved by installing a fan in a hollow interior of each of a left linear support and a right linear support of the unmanned aerial vehicle, thereby achieving the purposes of lowering temperature in the arm and protecting equipment in the arm.

Many implementations have been described. However, it should be understood that various modifications may be made without departing from the scope of the appended claims.

The details of one or more implementations of a subject matter described in the invention are set forth in the accompanying drawings and the description below. Other features, aspects and advantages of the subject matter will become apparent in accordance with the specification, the accompanying drawings, and the claims.

### BRIEF DESCRIPTION OF THE DRAWINGS

It should be noted that the accompanying drawings may be in simplified form and may not be precise in scale. With reference to the disclosure herein, for purposes of convenience and clarity only, directional terms such as top, bottom, left, right, up, down, upper side, above, beneath, below, rear portion, front portion, distal end, and proximal end are used with reference to the accompanying drawings. These directional terms should not be construed to limit the scope of the embodiments in any way.
FIG. 1a is a top perspective view of an embodiment of a VTOL (vertical takeoff and landing) unmanned aircraft system with a flight platform and a fan in accordance with one aspect of an embodiment;
FIG. 1b is a sectional view of a side portion of the unmanned aircraft system of FIG. 1a;
FIG. 1c is a top perspective view of an embodiment of a VTOL unmanned aircraft system with a flight platform and a fan in accordance with still another aspect of an embodiment;
FIG. 1d is a top perspective view of an embodiment of a VTOL unmanned aircraft system with a flight platform and a fan in accordance with still another aspect of the embodiment;
FIG. 2 is a side view of air inlets and air outlets of an unmanned aircraft system in accordance with one aspect of an embodiment;
FIG. 3 is a top perspective view of an embodiment of an unmanned aircraft system in accordance with still another aspect of an embodiment;
FIG. 4 is a top rear perspective view of the unmanned aircraft system of FIG. 3;
FIG. 5 is a side view of the unmanned aircraft system of FIG. 3;
FIG. 6 is a top perspective view of another embodiment of a VTOL unmanned aircraft system with a flight platform and a detachably attached pod in accordance with one aspect of the embodiment;
FIG. 7 is a top view of the unmanned aircraft system of FIG. 6 in accordance with one aspect of the embodiment;
FIG. 8 is a front view of the unmanned aircraft system of FIG. 6 in accordance with one aspect of the embodiment;
FIG. 9 is a top perspective view of an embodiment of a VTOL unmanned aircraft system with a flight platform and a detachably attached passenger pod in accordance with one aspect of the embodiment;
FIG. 10 is a front view of the unmanned aircraft system of FIG. 9 in accordance with one aspect of the embodiment;
FIG. 11 is a rear perspective view of the unmanned aircraft system of FIG. 9 in accordance with one aspect of the embodiment;
FIG. 12 is a side perspective view of the unmanned aircraft system of FIG. 9 in accordance with one aspect of the embodiment, wherein the passenger pod is detached from the flight platform and parked on the ground;
FIG. 13 is a rear perspective view of the embodiment of FIG. 9 in accordance with one aspect of the embodiment;
FIG. 14 is a rear perspective view of another embodiment in accordance with one aspect of the embodiment;
FIG. 15 is a side bottom perspective view of still another embodiment of an unmanned aircraft system in accordance with one aspect of the embodiment;
FIG. 16 is a perspective view of one embodiment of an unmanned aircraft system in accordance with another aspect of the embodiment;
FIG. 17 is a close-up view of an encircled region in FIG. 16 in accordance with another aspect of the embodiment;
FIG. 18 is a side view of one embodiment of an unmanned aircraft system in accordance with another aspect of the embodiment;
FIG. 19 is a front view of one embodiment of an unmanned aircraft system in accordance with another aspect of the embodiment;
FIG. 20 is a rear view of one embodiment of an unmanned aircraft system in accordance with another aspect of the embodiment;
FIG. 21 is an upward view of one embodiment of an unmanned aircraft system in accordance with another aspect of the embodiment;
FIG. 22 is a perspective view of another embodiment of a flight platform in accordance with another aspect of the embodiment;
FIG. 23 is a side view of another embodiment of a flight platform in accordance with another aspect of the embodiment;
FIG. 24 is a front view of another embodiment of a flight platform in accordance with another aspect of the embodiment;
FIG. 25 is a rear view of another embodiment of a flight platform in accordance with another aspect of the embodiment;
FIG. 26 is an upward view of another embodiment of a flight platform in accordance with another aspect of the embodiment;
FIG. 27 is a side view of another embodiment of a passenger pod in accordance with another aspect of the embodiment;
FIG. 28 is a bottom perspective view of another embodiment of a passenger pod in accordance with another aspect of the embodiment;
FIG. 29 is a front view of another embodiment of a passenger pod in accordance with another aspect of the embodiment;
FIG. 30 is a rear view of another embodiment of a passenger pod in accordance with another aspect of the embodiment;
FIG. 31 is an upward view of another embodiment of a passenger pod in accordance with another aspect of the embodiment;
FIG. 32 is a side view of another embodiment of a flight platform attached to a cargo pod in accordance with another aspect of the embodiment;
FIG. 33 is a perspective view of another embodiment of a flight platform without a propulsion propeller in accordance with another aspect of the embodiment;
FIG. 34 is a side view of another embodiment of a passenger pod with a propulsion propeller in accordance with another aspect of the embodiment;
FIG. 35 is a perspective view of still another embodiment of an unmanned aircraft system, wherein six flotation devices are inflated;
FIG. 36 is a side view of the unmanned aircraft system of FIG. 35;
FIG. 37 is a side sectional view of an unmanned aerial vehicle with a cooling system in accordance with one aspect of an embodiment of the invention;
FIG. 38 is a view illustrating a configuration of ailerons of an unmanned aerial vehicle.

Where reference is made to components with reference numerals, like parts are denoted by the same reference numerals throughout the accompanying drawings of the specification:
100-unmanned aerial vehicle; 101-flight platform; 102-main body; 103A-left linear support; 103B-right linear support; 104A-left main wing; 104B-right main wing; 105A-left front wing; 105B-right front wing; 106A-left vertical stabilizer; 106B-right vertical stabilizer; 107-propulsion propeller; 107A-left propulsion propeller; 107B-right propulsion propeller; 108A-first lift propeller; 108B-second lift propeller; 108C-third lift propeller; 108D-fourth lift propeller; 108E-fifth lift propeller; 108F-sixth lift propeller; 109A-left wingtip propeller; 109B-right wingtip propeller; 110A-left wingtip vertical stabilizer; 110B-right wingtip vertical stabilizer; 111A-left folding leg; 111B-right folding leg; 112A-first leaf spring; 112B-second leaf spring; 112C-third leaf spring; 112D-fourth leaf spring; 116-vertical expander; 117-central propulsion propeller; 130-cargo pod; 135A-first pod leaf spring; 135B-second pod leaf spring; 135C-third pod leaf spring; 135D-fourth pod leaf spring; 140-passenger pod; 145A-pod leg; 145B-pod leg; 145C-pod leg; 145D-pod leg; 147-pod-attaching latch; 148-electric wheel; 149-shell; 150-energy storage unit in flight platform; 155-energy storage unit in pod; 160-flotation device; 170-fan; 180-motor; 190-air inlet; 200-air outlet; 201-aileron; A-airflow direction; B-air inlet direction; C-air outlet direction.

### DETAILED DESCRIPTION OF THE EMBODIMENTS

Different aspects of various embodiments may now be better understood by turning to the following detailed description of the embodiments, which are presented as illustrative examples of the embodiments defined in the technical solutions. It is expressly understood that the embodiments defined by the technical solutions may be broader than the illustrated embodiments described below.

The words used in the specification to describe the various embodiments should be understood to not only have commonly defined meanings thereof, but, in structures, materials, or actions in the specification, to include special definitions beyond the scope of the generally defined meanings. Hence, if a component may be understood in the context of the specification to include more than one meaning, its use in the technical solution must be understood to be general for all possible meanings supported by the specification and the words themselves.

The term "unmanned aerial vehicle" is defined as a flight transportation system with at least one propeller as one propulsion source. The term "unmanned aerial vehicle" may comprise both "manned" and "unmanned" flight transportation systems. The "manned" unmanned aerial vehicle may refer to a flight transportation system that carries human passengers, none of which has right of control over the unmanned aerial vehicle. The "manned" unmanned aerial vehicle may also refer to a flight transportation system that carries human passengers, with some or one of the human passengers having a certain right of control over the unmanned aerial vehicle.

As the background, during the working period of a lift motor and an electronic speed controller of an existing vertical takeoff and landing unmanned aerial vehicle, there is no special equipment for heat dissipation of equipment in an arm, thus causing a certain influence on the equipment in the arm. To solve the problem that an arm of an unmanned aerial vehicle is poor in heat dissipation, the invention provides a vertical takeoff and landing unmanned aerial vehicle, which comprises: a left main ring and a right main wing; a left front wing and a right front wing; a main body which is engaged with the left main wing and the right main wing; a left linear support for connecting the left main wing with the left front wing; a right linear support for connecting the right main wing with the right front wing; the left linear support having a first group of multiple lift propellers arranged thereon, the right linear support having a second group of multiple lift propellers arranged thereon, and the left linear support and the right linear support each have a hollow interior; at least one air inlet which is provided on each of the left linear support and the right linear support; at least one air outlet which is provided on each of the left linear support and the right linear support; and a fan which is arranged in the hollow interior of each of the left linear support and the right linear support.

The technical solutions of the invention will be described below in detail in conjunction with specific accompanying drawings.

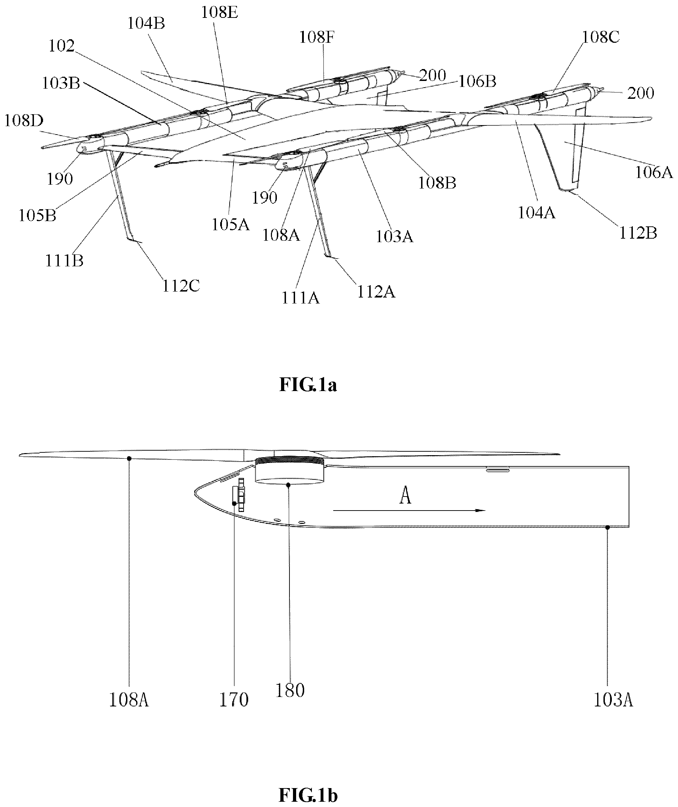

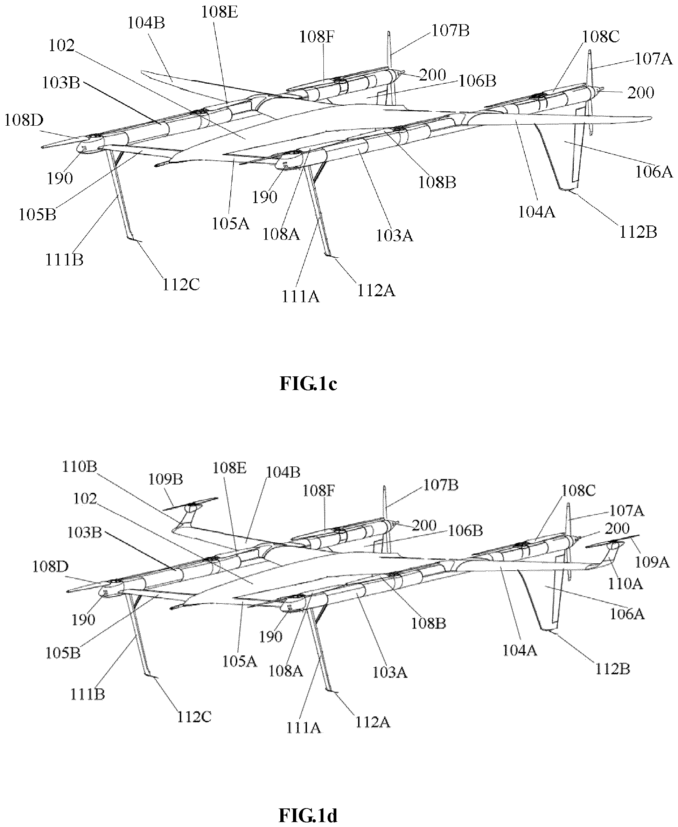

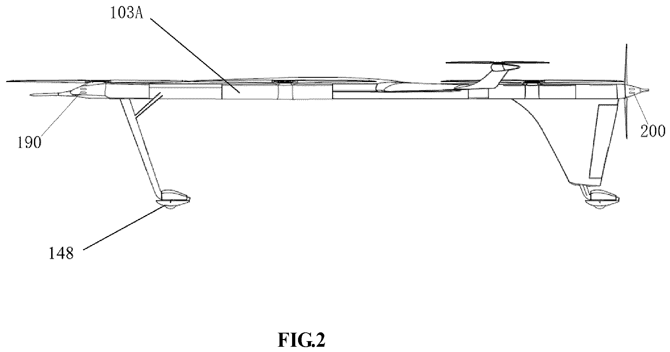

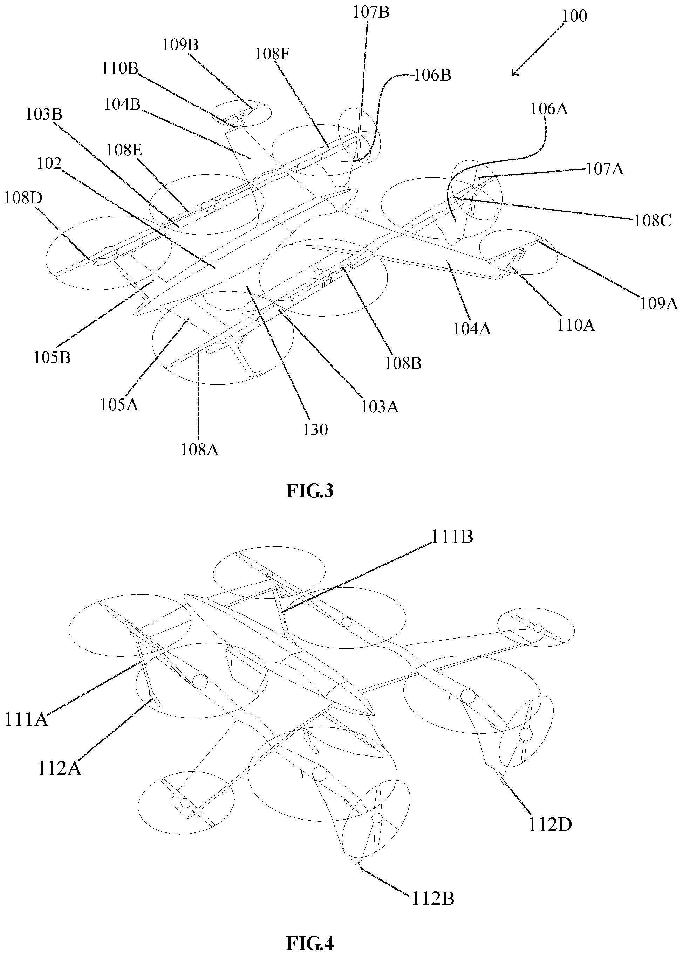

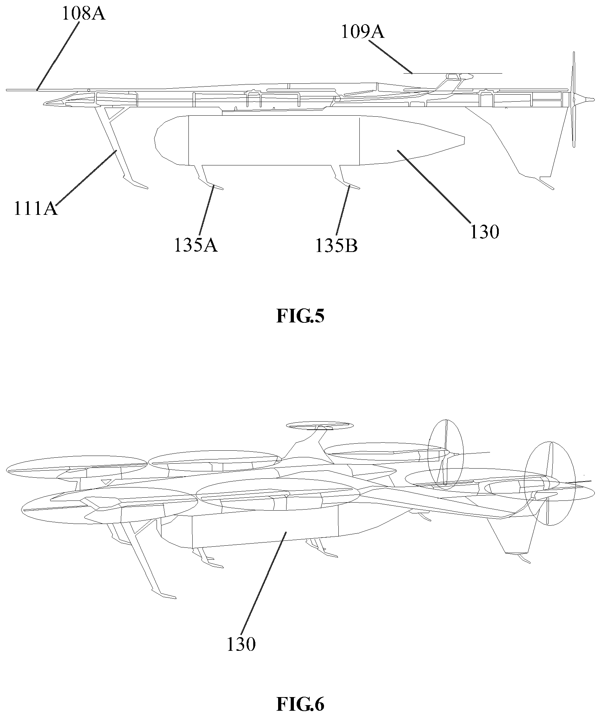

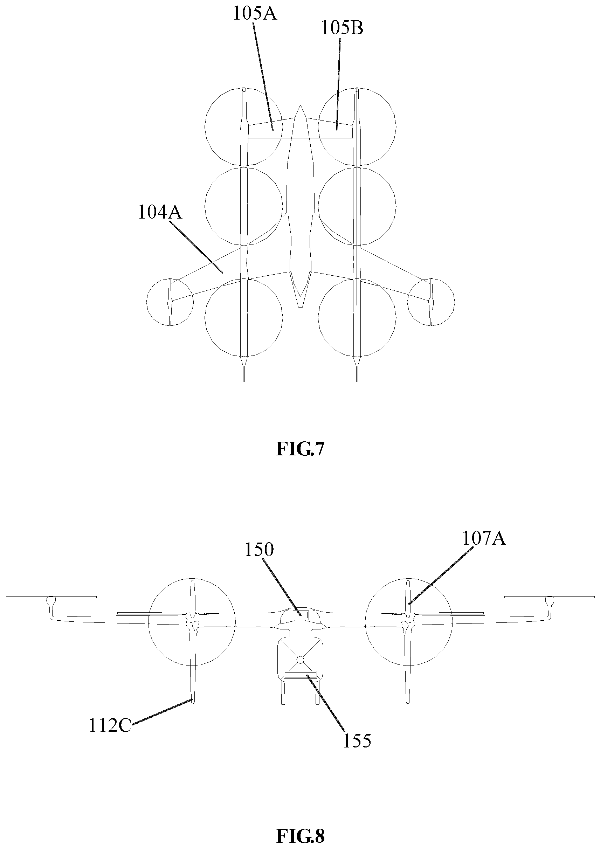

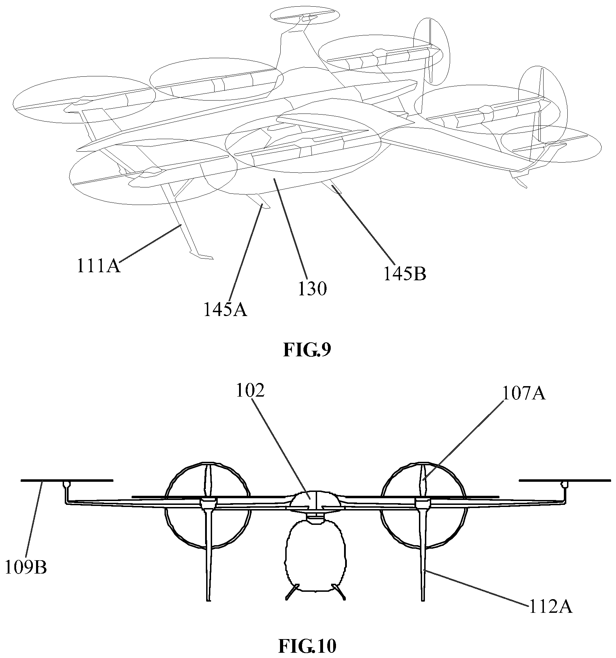

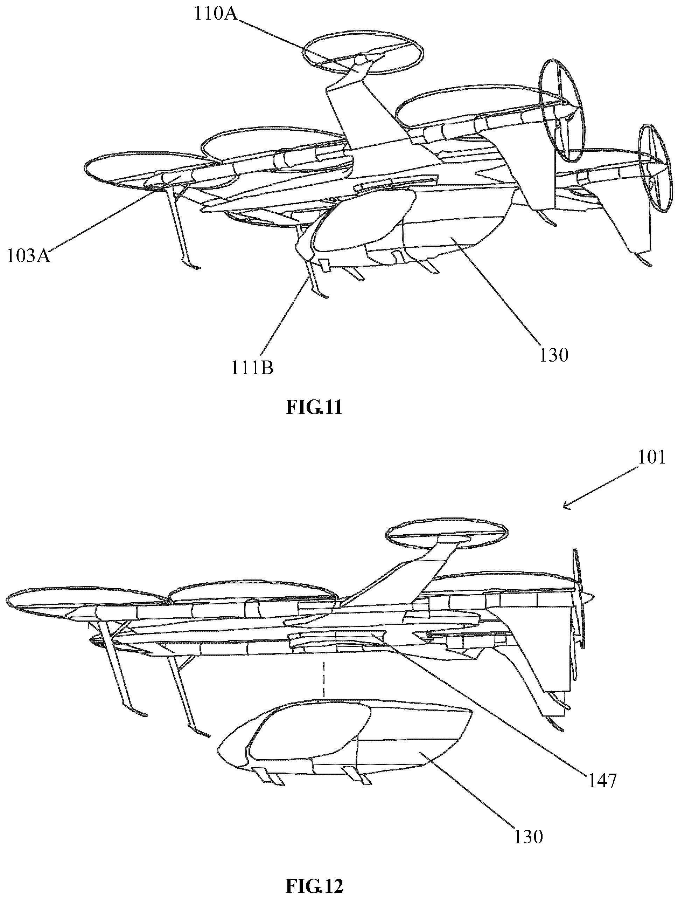

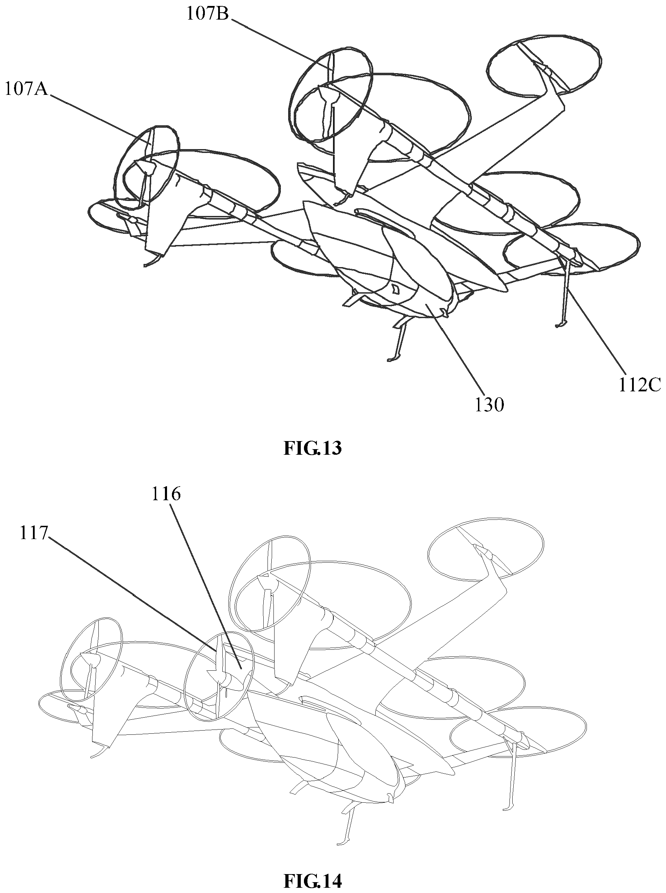

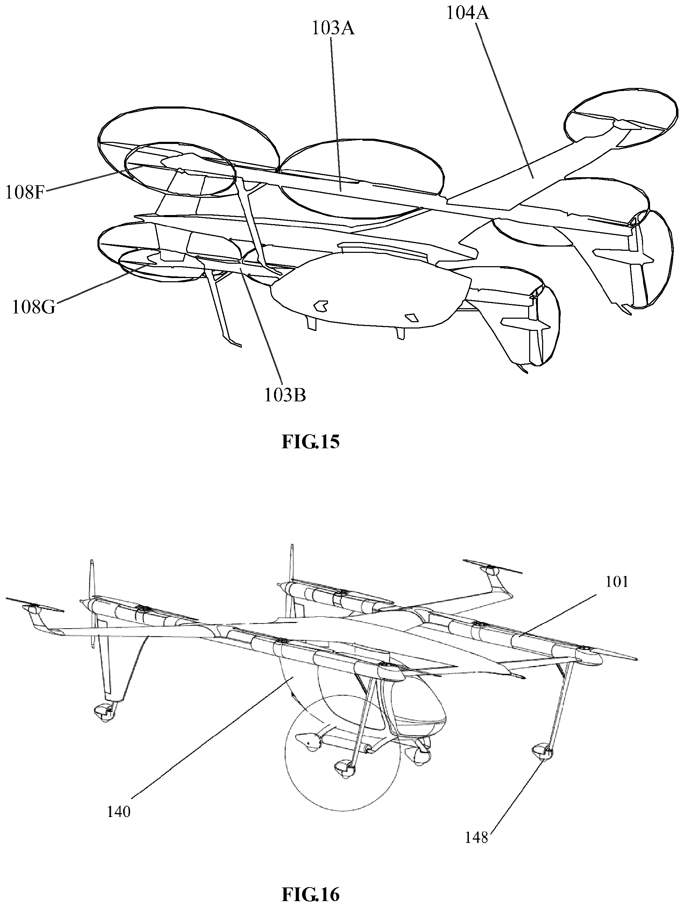

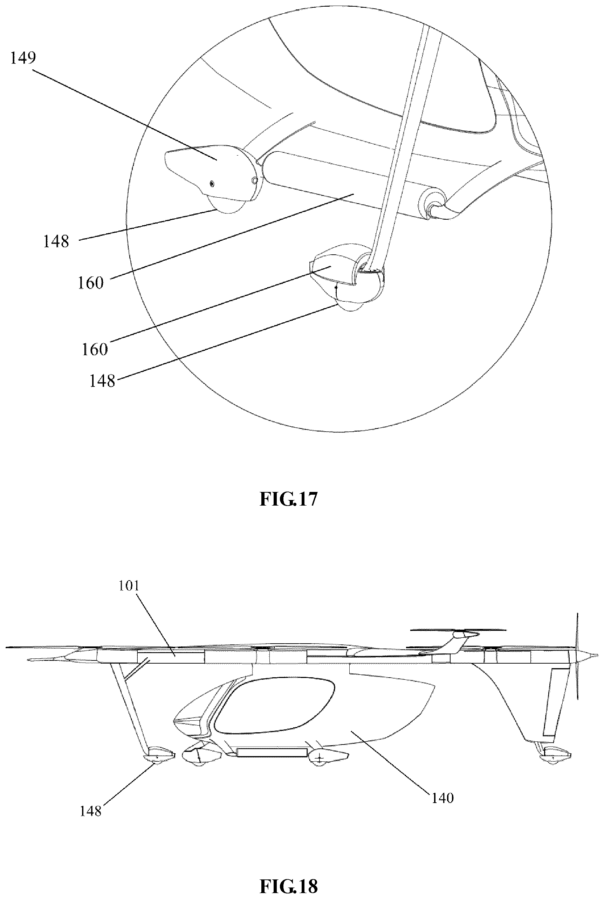

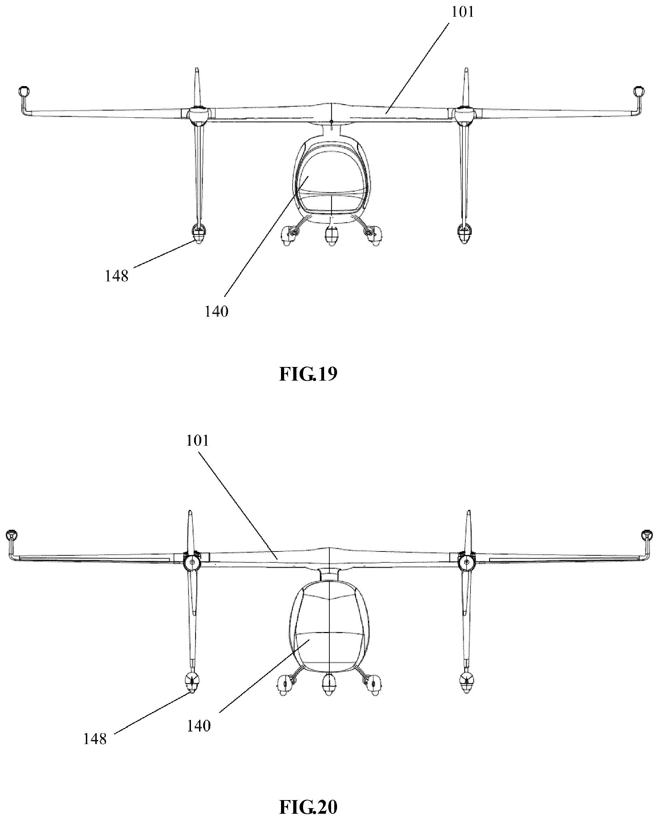

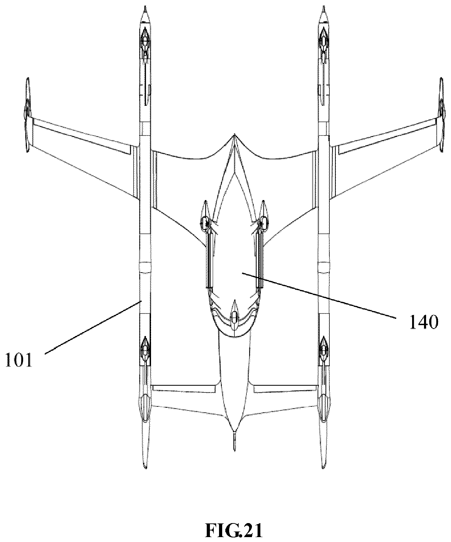

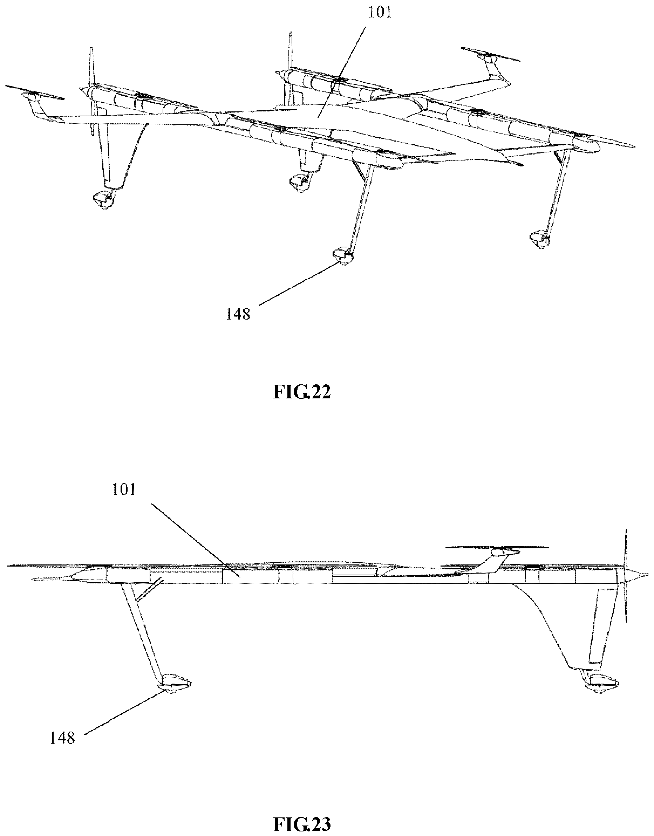

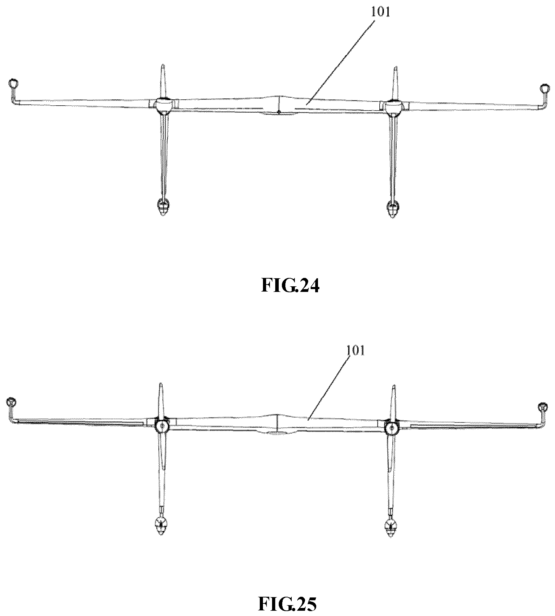

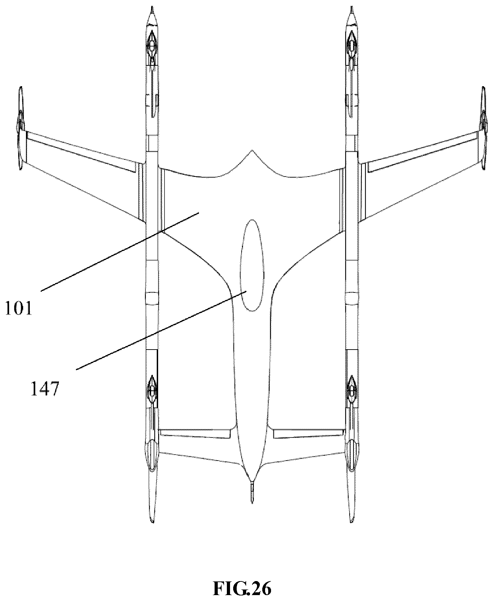

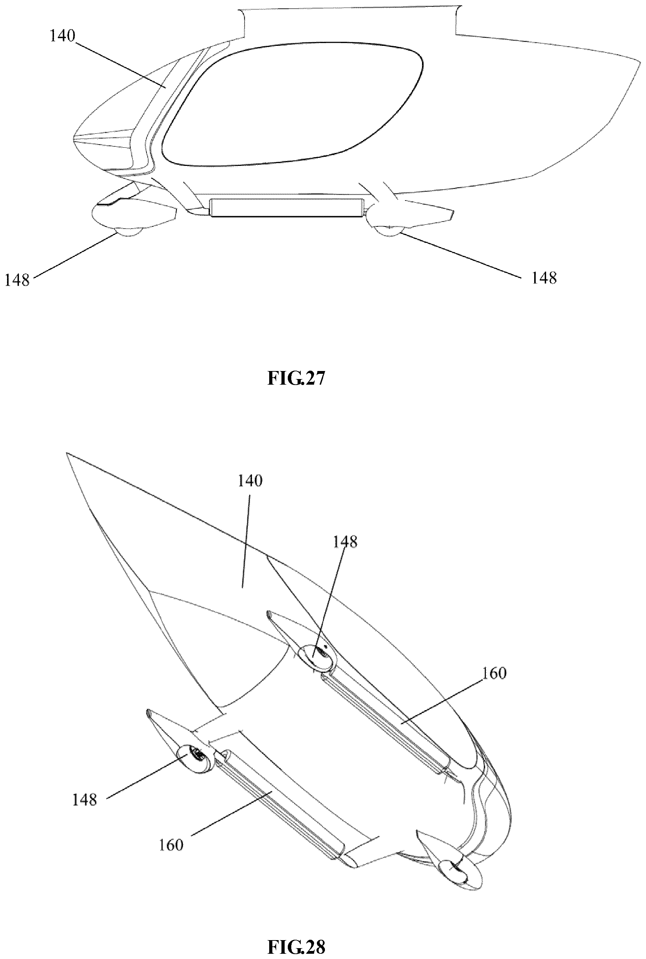

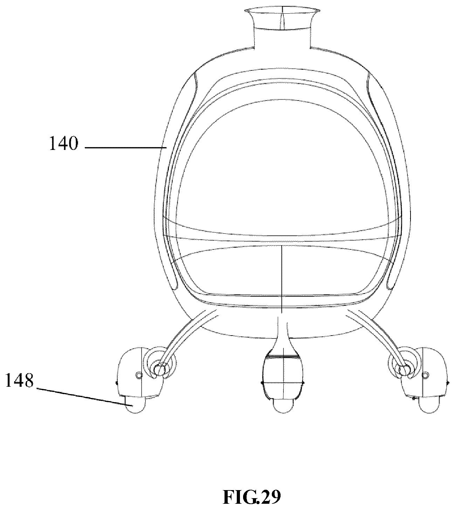

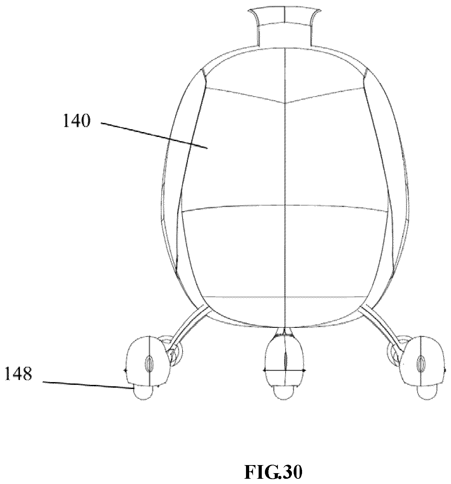

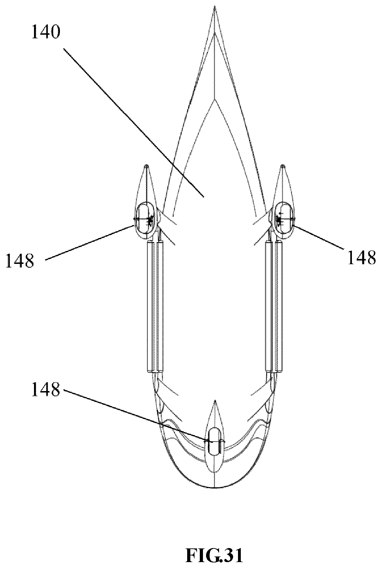

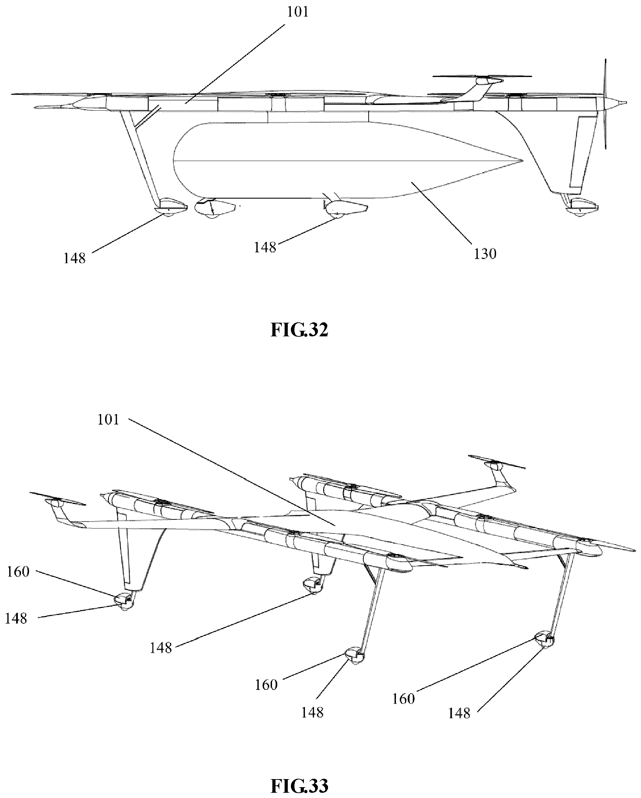

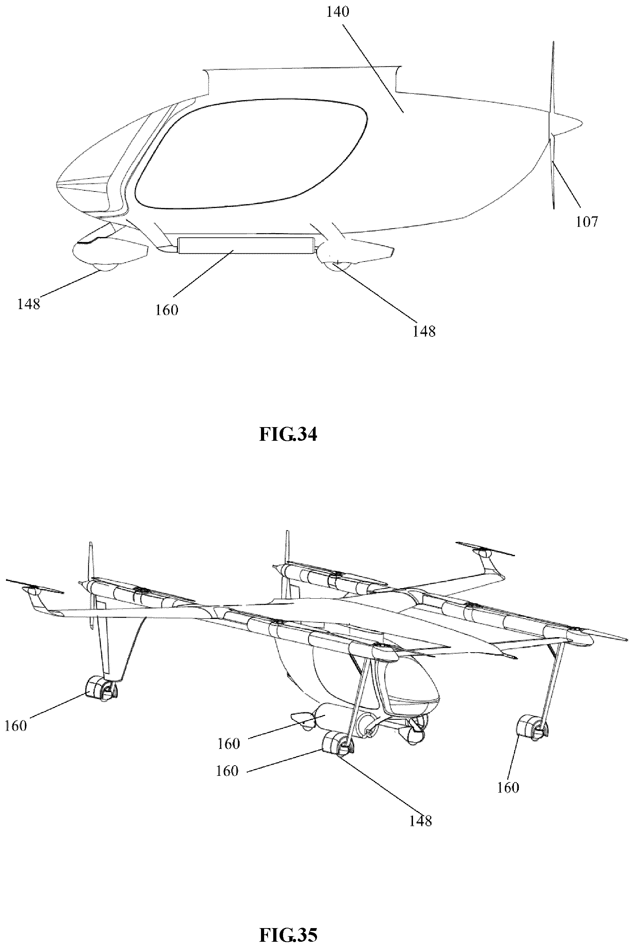

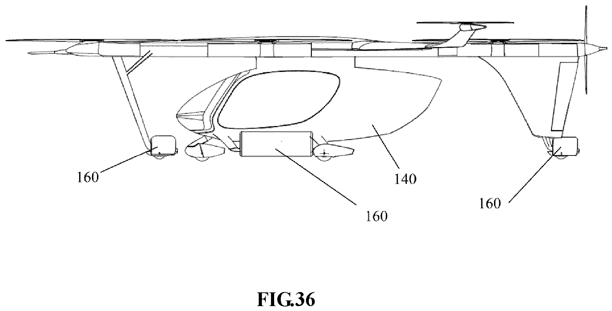

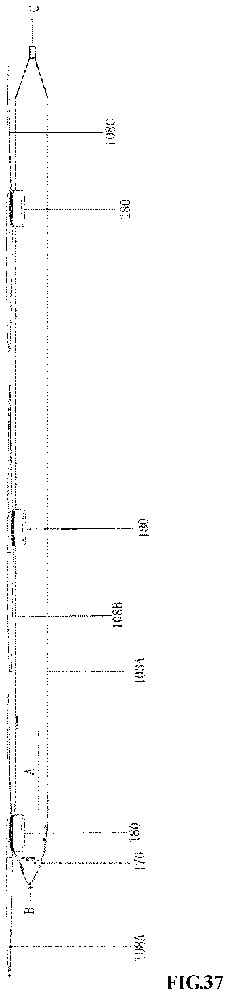

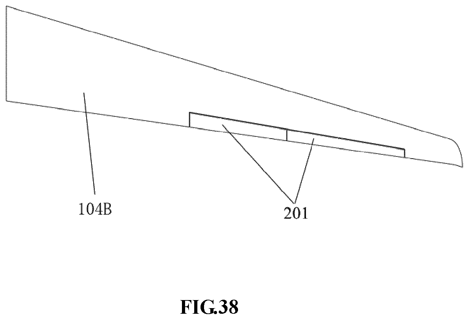

FIG. 1a is a top perspective view of an embodiment of a VTOL (vertical takeoff and landing) unmanned aircraft system with a flight platform and a fan in accordance with one aspect of an embodiment; FIG. 1b is a sectional view of a side portion of the unmanned aircraft system of FIG. 1a; FIG. 1c is a top perspective view of an embodiment of a VTOL unmanned aircraft system with a flight platform and a fan in accordance with still another aspect of an embodiment; FIG. 1d is a top perspective view of an embodiment of a VTOL unmanned aircraft system with a flight platform and a fan in accordance with still another aspect of the embodiment; FIG. 2 is a side view of air inlets and air outlets of an unmanned aircraft system in accordance with one aspect of an embodiment; FIG. 3 is a top perspective view of an embodiment of an unmanned aircraft system in accordance with still another aspect of an embodiment; FIG. 4 is a top rear perspective view of the unmanned aircraft system of FIG. 3; FIG. 5 is a side view of the unmanned aircraft system of FIG. 3; FIG. 6 is a top perspective view of another embodiment of a VTOL unmanned aircraft system with a flight platform and a detachably attached pod in accordance with one aspect of the embodiment; FIG. 7 is a top view of the unmanned aircraft system of FIG. 6 in accordance with one aspect of the embodiment; FIG. 8 is a front view of the unmanned aircraft system of FIG. 6 in accordance with one aspect of the embodiment; FIG. 9 is a top perspective view of an embodiment of a VTOL unmanned aircraft system with a flight platform and a detachably attached passenger pod in accordance with one aspect of the embodiment; FIG. 10 is a front view of the unmanned aircraft system of FIG. 9 in accordance with one aspect of the embodiment; FIG. 11 is a rear perspective view of the unmanned aircraft system of FIG. 9 in accordance with one aspect of the embodiment; FIG. 12 is a side perspective view of the unmanned aircraft system of FIG. 9 in accordance with one aspect of the embodiment, wherein a passenger pod is detached from the flight platform and parked on the ground; FIG. 13 is a rear perspective view of the embodiment of FIG. 9 in accordance with one aspect of the embodiment; FIG. 14 is a rear perspective view of another embodiment in accordance with one aspect of the embodiment; FIG. 15 is a side bottom perspective view of still another embodiment of an unmanned aircraft system in accordance with one aspect of the embodiment; FIG. 16 is a perspective view of one embodiment of an unmanned aircraft system in accordance with another aspect of the embodiment; FIG. 17 is a close-up view of an encircled region in FIG. 16 in accordance with another aspect of the embodiment; FIG. 18 is a side view of one embodiment of an unmanned aircraft system in accordance with another aspect of the embodiment; FIG. 19 is a front view of one embodiment of an unmanned aircraft system in accordance with another aspect of the embodiment; FIG. 20 is a rear view of one embodiment of an unmanned aircraft system in accordance with another aspect of the embodiment; FIG. 21 is an upward view of one embodiment of an unmanned aircraft system in accordance with another aspect of the embodiment; FIG. 22 is a perspective view of another embodiment of a flight platform in accordance with another aspect of the embodiment; FIG. 23 is a side view of another embodiment of a flight platform in accordance with another aspect of the embodiment; FIG. 24 is a front view of another embodiment of a flight platform in accordance with another aspect of the embodiment; FIG. 25 is a rear view of another embodiment of a flight platform in accordance with another aspect of the embodiment; FIG. 26 is an upward view of another embodiment of a flight platform in accordance with another aspect of the embodiment; FIG. 27 is a side view of another embodiment of a passenger pod in accordance with another aspect of the embodiment; FIG. 28 is a bottom perspective view of another embodiment of a passenger pod in accordance with another aspect of the embodiment; FIG. 29 is a front view of another embodiment of a passenger pod in accordance with another aspect of the embodiment; FIG. 30 is a rear view of another embodiment of a passenger pod in accordance with another aspect of the embodiment; FIG. 31 is an upward view of another embodiment of a passenger pod in accordance with another aspect of the embodiment; FIG. 32 is a side view of another embodiment of a flight platform attached to a cargo pod in accordance with another aspect of the embodiment; FIG. 33 is a perspective view of another embodiment of a flight platform without a propulsion propeller in accordance with another aspect of the embodiment; FIG. 34 is a side view of another embodiment of a passenger pod with a propulsion propeller in accordance with another aspect of the embodiment; FIG. 35 is a perspective view of still another embodiment of an unmanned aircraft system, wherein six flotation devices are inflated; FIG. 36 is a side view of the unmanned aircraft system of FIG. 35. FIG. 37 is a side sectional view of an unmanned aerial vehicle with a cooling system in accordance with one aspect of an embodiment of the invention; and FIG. 38 is a view illustrating a configuration of ailerons of an unmanned aerial vehicle.

FIG. 1a is a top perspective view of an embodiment of a VTOL unmanned aircraft system with a flight platform and a fan in accordance with one aspect of an embodiment. FIG. 1b is a sectional view of a side portion of the unmanned aircraft system of FIG. 1a. An unmanned aerial vehicle 100 at least comprises: a left main wing 104A and a right main wing 104B; a left front wing 105A and a right front wing 105B; a main body 102 which is engaged with the left main wing 104A and the right main wing 104B; a left linear support 103A for connecting the left main wing 104A with the left front wing 105A; a right linear support 103B for connecting the right main wing 104B with the right front wing 105B; the left linear support 103A having a first group of multiple lift propellers 108A, 108B and 108C arranged thereon; the right linear support 103B having a second group of multiple lift propellers 108D, 108E and 108F arranged thereon; wherein the left linear support 103A and the right linear support 103B each have a hollow interior; at least one air inlet 190 which is provided on each of the left linear support 103A and the right linear support 103B; at least one air outlet 200 which is provided on each of the left linear support 103A and the right linear support 103B; and a fan 170 which is arranged in the hollow interior of each of the left linear support 103A and the right linear support 103B.

By adopting the unmanned aerial vehicle provided by the invention, heat dissipation in an arm of the unmanned aerial vehicle is achieved by installing a fan in the hollow interior of each of a left linear support and a right linear support of the unmanned aerial vehicle, thereby achieving the purposes of lowering the temperature in the arm and protecting equipment in the arm.

FIG. 3 depicts an embodiment of a VTOL unmanned aerial vehicle 100 with a front wing configuration in general.

The unmanned aerial vehicle 100 in FIG. 3 may have two main wings 104A, 104B as a left main wing and a right main wing, and two front wings as a left front wing 105A and a right front wing 105B. The two main wings 104A, 104B and the two front wings 105A, 105B may be attached to a main body 102, wherein the main body may be positioned along a central longitudinal line of the unmanned aerial vehicle 100. The unmanned aerial vehicle 100 may also have a left linear support 103A arranged parallel to the main body 102, which may connect the left main wing 104A to the left front wing 105A. Similarly, the unmanned aerial vehicle 100 may also have a right linear support 103B arranged parallel to the main body 102, which may connect the right main wing 104B to the right front wing 105B. Wherein the front wings of the unmanned aerial vehicle mainly control a flight attitude of the unmanned aerial vehicle during the flight period, such as controlling the pitch of the unmanned aerial vehicle. The main wings of the unmanned aerial vehicle, acting as the largest wings at the two sides of a fuselage, are usually used for generating lift to support the unmanned aerial vehicle to fly in the air, and meanwhile, certain stabilization and manipulation effects are achieved.

In one embodiment, the unmanned aerial vehicle 100 may also not have the front wing configuration. Illustratively, the unmanned aerial vehicle 100 may have two main wings as a left main wing and a right main wing, and two ailerons as a left aileron and a right aileron, all of which are engaged together to form a flight platform.

In one embodiment, as shown in FIG. 38, the aileron 201 of the unmanned aerial vehicle may be arranged at the rear side of the main wing 104B, there may be at least one aileron, preferably two, which is in a sheet-like configuration, and capable of moving up and down to control the roll of the aircraft.

The left linear support 103A and the right linear support 103B are expected to improve the structural integrity of the unmanned aerial vehicle 100. In other embodiments, the left linear support 103A and the right linear support 103B may accommodate driving motors (not shown) for driving each lift propeller 108A, 108B, 108C, 108D, 108E, and 108F. Thus, the left linear support 103A and the right linear support 103B may be used for fixing the lift propellers to reduce usage of the parts of the unmanned aerial vehicle, and while simplifying structural parts of the unmanned aerial vehicle, the overall strength of the unmanned aerial vehicle may be improved due to the engagement of the left linear support 103A and the right linear support 103B with the two front wings and the two main wings. As will be disclosed later, the left linear support 103 A and the right linear support 103B may also accommodate folding legs 111, each of which may be retracted into the left linear support 103 A and the right linear support 103B.

In one possible embodiment, two ends of each of the left linear support 103 A and the right linear support 103B are formed as a tapered structure. Preferably, the apex of the tapered structure at each end part of the left linear support 103A is located on the axis of the left linear support 103A, and the apex of the tapered structure at each end part of the right linear support 103B is located on the axis of the right linear support 103B. It is easy to understand that resistance of air to the linear supports in the flight process of the unmanned aerial vehicle 100 may be reduced by forming two ends of each of the left linear support 103A and the right linear support 103B as the tapered structure, and thus the cruising ability of the unmanned aerial vehicle 100 is improved. The embodiment is not intended to limit an included angle between a generatrix and the axis of the tapered structure, and those skilled in the art may set the included angle according to actual needs.

In one embodiment, the left linear support 103A and the right linear support 103B are attached to the distal ends of the left front wing 105A and the right front wing 105B respectively. In still another embodiment, the left linear support 103A and the right linear support 103B extend beyond the front wings 105A, 105B.

In one embodiment, the left linear support 103A and the right linear support 103B are attached to positions near the middle portions of the left main wing 104A and the right main wing 104B respectively. In still another embodiment, the left linear support 103A and the right linear support 103B extend beyond the main wings 104A, 104B along a backwards direction.

The left linear support 103A is expected to be relative narrow in diameter, and may have a first group of multiple lift propellers 108A, 108B, 108C arranged at the top side, the bottom side, or both, of the left linear support 103A. In one feasible embodiment, these lift propellers 108A, 108B, 108C may be driven by low profile motors arranged in the hollow interior of the left linear support 103A. In an embodiment shown in FIG. 3, the lift propellers 108A, 108B, 108C are only arranged at the top side of the left linear support 103A. It should be noted that the number of the lift propeller shown in the figure is for illustrative purpose only, the invention is not intended to limit the number of the lift propeller, and the lift propeller may be increased or decreased according to the demand in actual. Likewise, the right linear support 103B is expected to be relative narrow in diameter, and may have a second group of multiple lift propellers 108D, 108E, and 108F arranged on the top side, the bottom side, or both, of the right linear support 103B. In one feasible embodiment, these lift propellers 108D, 108E, 108F may be driven by low profile motors arranged in the hollow interior of the right linear support. In an embodiment shown in FIG. 3, the lift propellers 108D, 108E, 108F are only arranged at the top side of the right linear support 103B. It should be noted that the number of the lift propeller shown in the figure is for illustrative purpose only, the invention is not intended to limit the number of the lift propeller, and the lift propeller may be increased or decreased according to the demand in actual.

In one embodiment, the left linear support 103A has at least one air inlet and at least one air outlet which are provided thereon. Illustratively, referring to FIG. 2, at least one air inlet 190 and at least one air outlet 200 may be provided at the front end and the rear end of the left linear support 103A respectively, thereby allowing air to enter the hollow interior of the left linear support 103A from an external environment. The at least one air inlet and the at least one air outlet may be flexibly provided, for example, in addition to that the air inlet may be provided at a position near the front end of the left linear support 103A and the air outlet may be provided at a position near the rear end of the left linear support 103A, the air inlet and the air outlet may also be provided at the side faces (the top face, the bottom face, the left side face and the right side face) of the left linear support 103A, and the invention is not intended to limit the providing of the air inlet and the air outlet. In one embodiment, a diameter or width of each air inlet in the at least one air inlet is less than a radius of the left linear support 103A. It should be noted that the air inlets and the air outlets shown in FIG. 2 are for illustrative purpose only, the invention is not intended to limit the shape and number of the air inlet and the air outlet, and the air inlet and the air outlet may be flexibly provided according to the demand in actual.

Preferably, the air inlets 190 are located at the front ends of the left linear support 103A and the right linear support 103B, and the air outlets 200 are located at the rear ends of the left linear support 103A and the right linear support 103B. It should be understood by those skilled in the art that the air flows into the hollow interiors from the air inlets 190 at the front ends of the left and right linear supports 103A and 103B and flows out of the air outlets 200 at the rear ends of the left and right linear supports 103A and 103B, thereby dissipating heat from the left linear support 103A and the right linear support 103B as a whole to prevent the interiors of the left linear support 103A and the right linear support 103B from excessive local temperatures.

One possible implementation is that, the two ends of each of the left linear support 103A and the right linear support 103B are of a tapered structure, the air inlets 190 are located at the front ends of the left linear support 103A and the right linear support 103B, and the air outlets 200 are located at the rear ends of the left linear support 103A and the right linear support 103B. At the moment, the shapes of the air inlet 190 and the air outlet 200 may be provided in an oblong, a length direction of the oblong is arranged along a generatrix of the tapered structure, a spacing is provided between adjacent air inlets 190, and a spacing is provided between adjacent air outlets 200. It should be understood by those skilled in the art that providing the shapes of the air inlet 190 and the air outlet 200 to be the oblong may avoid the causing of large influence on the structural strength of the left linear support 103A and the right linear support 103B on the basis of guaranteeing air intake and exhaust of the left linear support 103A and the right linear support 103B.

Further, a fan is arranged in the hollow interior of the left linear support 103A to force the air from the air inlet to reach the air outlet through the hollow interior. In one embodiment, the fan may be arranged at a position near the front end of the left linear support 103A. In one embodiment, a rotating shaft of the fan is perpendicular to a rotating shaft of each of the lift propellers 108A, 108B, 108C in the plurality of lift propellers.

Specifically, as shown in FIG. 3, taking the left linear support 103A as an example, in the interior space of the left linear support 103A, a cooling fan 170 is arranged below a lift motor 180 of the lift propeller 108A and in front of the left linear support 103A, and a wind field of the cooling fan 170 blows towards the rear portion of the left linear support 103A to form an airflow flowing backwards in the left linear support 103A, thereby facilitating the utilization of the airflow in the flight process of the unmanned aerial vehicle and accelerating the heat dissipation. After the takeoff and landing unmanned aerial vehicle is shifted to a level flight stage, the lift motor stops working, and the cooling fan stops working at the same time. In one embodiment, the right linear support 103B has at least one air inlet (not shown) and at least one air outlet (not shown) which are provided thereon, but may be similarly provided as shown in FIG. 2, thereby allowing the air to enter the hollow interior of the right linear support 103B from the external environment; the at least one air inlet and the at least one air outlet may be flexibly provided, for example, the air inlet may be provided at a position near the front end of the right linear support 103B, while the air outlet may be provided at a position near the rear end of the right linear support 103B, or the air inlet and the air outlet may be provided at side faces (top face, bottom face, left and right side faces) of the right linear support 103B. Wherein a diameter or width of each air inlet in the at least one air inlet is less than a radius of the right linear support 103B. The air inlet and the air outlet of the right linear support 103B may be similarly provided with reference to FIG. 2; and likewise, the shapes and the number of the air inlet and the air outlet are not limited thereto.

Further, a fan is arranged in the hollow interior of the right linear support 103B to force air from the air inlet to reach the air outlet through the hollow interior. In one embodiment, the fan is arranged at the position near the front end of the right linear support 103B. In one embodiment, a rotating shaft of the fan is perpendicular to a rotating shaft of each lift propeller 108D, 108E, 108F in the plurality of lift propellers. The fan may be correspondingly arranged in the right linear support 103B similarly as shown in FIG. 3.

By installing the cooling fans in the left linear support 103A and the right linear support 103B of the unmanned aerial vehicle respectively, the cooling fans start to work while lift motors of the unmanned aerial vehicle work, the hot airflow in the arms (i.e., the left linear support and the right linear support) is exhausted through flow fields generated by the cooling fans, thereby achieving the purposes of lowering the temperature in the arms and protecting equipment in the arms.

In one embodiment, the diameter or width of each air inlet in the at least one air inlet is less than the radius of each of the left linear support and the right linear support. The providing of the diameter or width of the air inlet and the air outlet are beneficial to maintaining stability of the unmanned aerial vehicle in the flight process, and the situation that the normal flight of the unmanned aerial vehicle is affected due to unstable airflow in the unmanned aerial vehicle caused by overlarge openings is prevented.

In one embodiment, the unmanned aerial vehicle further comprises a detachable pod attached to the bottom face of the unmanned aerial vehicle, wherein the pod is a passenger pod or a cargo pod. By means of the arrangement mode as above, a structure of the unmanned aerial vehicle may be flexibly adjusted; in accordance with the actual conditions, the pod may be installed when needed, and may be detached when not needed, and therefore the unmanned aerial vehicle may be flexibly used in response to different requirements, and the adaptability of the unmanned aerial vehicle is improved.

In one embodiment, the rotating shaft of the fan is perpendicular to the rotating shaft of each lift propeller of the plurality of lift propellers, such arrangement makes cooling fan blades of the fan be perpendicular to propeller blades of the unmanned aerial vehicle, as shown in FIG. 1c, airflow A generated by rotation of the fan horizontally flows backwards in the linear support; the situation that, due to the fact that the fan is not arranged in such a way, the airflow A in the hollow interior is influenced by the inner surface of the arm and cannot flow through the hollow interior as quickly as possible to take away the heat is avoided.

In one embodiment, the left linear support 103A and the right linear support 103B may both be in a straight configuration which is in favor of improving the overall strength of the unmanned aerial vehicle.

In one embodiment, the main wing and the aileron of the unmanned aerial vehicle 100 may be configured as a front wing configuration. As shown in FIG. 38 and the rest accompanying drawings showing the front wing configuration, the main wing and aileron may be a plate-like configuration of the main wing.

In one embodiment, the unmanned aerial vehicle 100 may have at least one propulsion propeller 100 to propel the unmanned aerial vehicle 100 in a forward direction. In various embodiments as shown in FIG.1c, 1d and 3, there may be two propulsion propellers 107A, 107B. The two propulsion propellers 107A, 107B may be arranged at the distal ends at the rear portions of the linear supports 103A, 103B.

In still another embodiment, such as an embodiment shown in FIG. 33, a flight platform 101 may not have a propulsion propeller. In such embodiment, the flight platform 101 may be attached to a passenger pod or a cargo pod which is provided with the propulsion propeller. FIG. 34 illustrates an embodiment of a passenger pod having a propulsion propeller arranged at the rear end thereof. When the passenger pod is attached to the flight platform 101 of FIG. 33, the propulsion propeller propels the flight platform 101 forwards.

In one embodiment, two vertical stabilizers 106A, 106B may be arranged at positions near the rear ends of the linear supports 103A, 103B respectively. Although the vertical stabilizers are shown pointing downward, there may have embodiments in which the vertical stabilizers point upward.

In another embodiment, as shown in FIG. 1d and FIG. 3, the main wings 104A, 104B may be respectively provided with wingtip lift propellers 109A, 109B arranged at the distal ends thereof. This may be achieved by providing the wingtip vertical stabilizers 110A, 110B at the distal ends of the main wings 104A, 104B, respectively, and having the lift propellers 109 A, 109B arranged at the upper tips of the wingtip vertical stabilizers 110A, 110B. These wingtip lift propellers 109A, 109B may be relatively smaller than the lift propellers arranged on the linear supports 103A, 103B.

These wingtip lift propellers 109A, 109B may be used for efficiently and effectively controlling the roll of the unmanned aerial vehicle 100. These wingtip lift propellers 109A, 109B are located at the most distal positions away from the center axis of the unmanned aerial vehicle 100 and are effective in regulating the roll of the unmanned aerial vehicle 100, and may do so with a diameter less than those of the other lift propellers.

As further shown in FIG. 3, there is a pod 130 normally attached beneath the main body 102 of the unmanned aerial vehicle 100.

Now referring to details in FIG. 4, the unmanned aerial vehicle 100 is expected to use any type of landing gear. In one embodiment, the unmanned aerial vehicle 100 may have four single leaf springs 112A, 112B, 112C, 112D as the landing gears. The front two single leaf springs 112A, 112C are respectively arranged at the distal ends of folding legs 111A, 111B. During the flight, the folding legs 111A, 111B may be respectively retracted into interior spaces of the left linear support 103A and the right linear support 103B.

In one embodiment, the tail ends of the landing gears of the unmanned aerial vehicle may be provided with leaf springs as shown in FIG. 1a to FIG. 15, or the tail ends of the landing gears of the unmanned aerial vehicle may be provided with electric wheels as shown in FIG. 16 to FIG. 36.

The two single leaf left springs 112B, 112D at the rear side are expected to be respectively arranged at the distal ends of the bottoms of the vertical stabilizers 106A, 106B.

The expected single leaf springs 112A, 112B, 112C, 112D may be made of appropriate materials to provide enough elasticity and integrity, the materials comprise natural and synthetic polymers, various metals and metallic alloy, natural materials, textile fibers, and all reasonable combination thereof. In one embodiment, carbon fibers are used.

Now turning to FIG. 5, a pod used as a cargo pod 130 is illustrated. The cargo pod 130 may have single leaf springs 135A, 135B, 135C, 135D as landing gears thereof. Or, the cargo pod 130 may have other type of landing gear, for example, sliding rails, legs, and wheels.

In an expected embodiment, the cargo pod 130 may be detached from the other portion of the unmanned aerial vehicle 100. The other portion of the unmanned aerial vehicle may be called as a flight platform 101. The flight platform 101 may fly without carrying the pod, and may interchangeably carry different pods. As will be described later, the flight platform 101 may carry a passenger pod.

In an illustrated example, all pods 130, 140 may be carried beneath the flight platform 101. The pods 130, 140 are expected to be loaded on the ground, and the loading process may be completed before or after attaching the flight platform 101 to the pods 130, 140.

FIG. 7 illustrates a top view of a flight platform 101. The flight platform 101 may have a generally flat configuration, and capable of carrying a load therebelow or thereabove. During high-speed flight, all six lift propellers 108A, 108B, 108C, 108D, 108E, 108F may be locked in place, and thus each blade is parallel to the main body 102.

FIG. 7 illustrates one embodiment of the flight platform 101, wherein the length of each of the front wings 105A, 105B is not longer than a half of that of each of the main wings 104A, 104B.

FIG. 8 depicts a front view of a flight platform 101 with a detachably attached cargo pod 130 in general. Whether the cargo pod 130, the passenger pod 140, or any other type of load, it is specifically expected that there may be an energy storage unit 150 arranged in the main body 102 of the flight platform. Stored energy may be used to power the other parts of the flight platform, such as the lift propellers 108A, 108B, 108C, 108D, and the propulsion propellers 107A, 107B. The stored energy may be electric power, and the storage unit is a battery. In another embodiment, the energy storage unit 150 may be used to power accessories in the pods 130, 140.

These batteries 150 may also be arranged in the other portions of the flight platform 101, such as in the linear supports 103A, 103B.

Alternatively or preferably, there may be energy storage units 155 arranged in the pods 130, 140. Energy stored in the storage units 155 may be used to power the lift propellers 108A, 108B, 108C, 108D, and propulsion propellers 107A, 107B. The stored energy may be electric power, and the storage unit is a battery. By arranging the energy storage units 155 in the pods 130, 140, whenever the flight platform 101 is attached to new pods 130, 140, the flight platform 101 will have a supplemental energy source. The flight platform 101 itself may be an emergency energy store or a battery 150 with smaller capacity to supply power to the flight platform 101 for a relatively short period of time when the flight platform 101 is in flight without the pods 130, 140. In one embodiment, the main power supply of the flight platform 101 is from the batteries 150 located in the pods 130, 140. In this way, the flight platform 101 or the entire VTOL unmanned aircraft system 100 will have a fully charged energy source when the flight platform 101 replaces the old pods 130, 140 with the new pods 130, 140. This is a beneficial method without requiring the VTOL unmanned aerial vehicle to charge itself. In a preferred embodiment, the flight platform 101 may work/fly continuously for hours or even days to attach the cargo pod/passenger pod and detach the cargo pod/passenger pod without stopping to charge batteries thereof.

Now referring to the details of FIG. 9, a passenger pod 150 is provided. The passenger pod 150 may use any type of landing gear, such as rigid legs 145A, 145B, 145C, 145D as shown in the figure.

FIG. 12 depicts one aspect of the invention in general, wherein a pod (whether a cargo pod or a passenger pod) is detachable. Here, the passenger pod 140 may be selectively detached from the flight platform 101. The engagement and disengagement between the flight platform 101 and the pod 140 may be autonomously executed (without simultaneous user intervention) by a computer and/or other sensors and a calculation device. Alternatively or preferably, a user may actively control and guide the engagement and disengagement between the flight platform 101 and the pod 140.

As will be recognized by those of ordinary skill in the art, various types of engagement mechanisms 147 may be used to fix the pod 140 to the flight platform 101. For example, the engagement mechanism may be a mechanical latch, a magnetic latch, a track and groove, or a combination of any known engagement ways.

It is important to understand that, in addition to having two propulsion propellers 107A and 107B (as shown in FIG. 13), alternatively or alternatively, there may be a central propulsion propeller 117 which is connected to the rear end of the main body 102 (as shown in FIG. 14). As shown in FIG. 14, the central propulsion propeller 117 is engaged to the rear end of the main body 102 through a vertical expander 116. The vertical expander 116 may be any structure in any shape to physically engage with the propulsion propeller 117, thereby making a rotating center of the propulsion propeller 117 perpendicularly deviate from the main body 102. In still another embodiment, the propulsion propeller 117 perpendicularly deviates from the main body 102, thereby making the rotating center of the propulsion propeller 117 be perpendicularly located at a position at the rear portion of the pod 140 or be perpendicularly flushed with the pod 140. In another embodiment, the propulsion propeller 117 is perpendicularly flushed with the top of the pod 140. In another embodiment, the propulsion propeller 117 is perpendicularly flushed with the middle portion of the pod 140. In a further embodiment, the propulsion propeller 117 is perpendicularly flushed with the bottom of the pod 140.

What is not shown in any figure of the embodiment is the absence of the propulsion propellers 107A, 107B at the end parts of the linear supports 103A, 103B respectively. Instead, there may only be one propulsion propeller 117 engaged with the rear end of the main body 102.

It may also be contemplated that each of the linear supports 103A, 103B may comprise more than three lift propellers, which may be achieved by providing a longer linear support to accommodate more lift propellers, by using a lift propeller with smaller diameter, or by placing lift propellers on both the top and bottom sides of the linear support. One embodiment is illustrated in FIG. 15, wherein two additional lift propellers 108G, 108H are arranged at the front ends of the bottoms of the linear supports 103A, 103B.

Although the propulsion propellers 107A, 107B have been illustrated in the foregoing figures to be positioned at the distal ends of the rear portions of the linear supports 103A, 103B, it is particularly expected that these propulsion propellers 107A, 107B may be arranged at a horizontal plane lower than the main wings 104A, 104B, as those shown in FIG. 15. In one aspect, these propulsion propellers 107A, 107B may be arranged at a horizontal plane which is basically equal to pods 130, 140 carried by the flight platform. In another aspect, these propulsion propellers 107A, 107B may be arranged at the middles of the vertical stabilizers 106A, 106B. One expected reason for lowering the arrangement of the propulsion propellers 107A, 107B is to minimize head dipping effect during the flight, which may be caused by aerodynamic effects caused by the pods 130, 140.

FIG. 16 to FIG. 32 illustrate an embodiment in which a flight platform 101 or pods 130, 140, or both, may each have electric wheels 148 attached thereto. In an embodiment of FIG. 16, the flight platform 101 is provided with the electric wheels 148; and each of the pods 130, 140 is also provided with the electric wheels. Now referring to an embodiment of the FIG. 17, single electric wheel 148 unit may have a motor enclosed in a shell 149, and the motor may be driven the power supplied by the energy storage unit 150 arranged in each of the pods 130, 140.

It is contemplated that the electric wheels 148 may enable the flight platform 101 or the pod 130 to move on the ground when the flight platform and the pod are parked on the ground. This allows the one of pods 130, 140 to move away from the flight platform 101 and allows another of the pods 130, 140 to move itself to the flight platform 101 for engagement.

Or, this may allow the flight platform 101 to be away from the pod 130 and to move towards another pod for engagement. In one embodiment, each of the pods 130, 140 may have an energy storage unit 155, and therefore, an energy source of the flight platform 101 is substantially supplemented when the flight platform 101 is engaged with the new and fully charged pods 130, 140.

In certain embodiments of the disclosed unmanned aircraft system, at least one flotation device 160 may be provided, which is engaged with at least one of the cargo pod 130, the passenger pod 140, and the flight platform 101. The flotation device may be of the type that requires actuation, that is, active inflation with gas or through material when needed. In other words, in this particular embodiment, the flotation device 160 may remain in a deflated state and may expand only when the inflation is triggered at certain conditions. For example, the flotation device 160 may automatically inflate during emergency landing, may automatically inflate when landing on water, and may inflate when any landing gear fails in certain aspects.

Many known types of inflation mechanisms or airbag mechanisms may be implemented to achieve the needs and configuration of the disclosed flotation device 160. The expected flotation device 160 may be of a type that can be repeatedly reused, re-inflated, and re-deflated. The expected flotation device 160 may be merely disposable.

Alternatively or preferably, an inflation behavior may be activated by a user. For example, when an operator of the unmanned aircraft system determines that the flotation device 160 needs to be inflated, he or she may send a signal to start the inflation.

It should be particularly noted in certain embodiments that the flotation device 160 does not need the electric wheel 148. In other embodiments, the flotation device 160 is a part of a shell of the electric wheel 148.

Referring to FIG. 28 as one example, a passenger pod 140 may have a lengthened type flotation device 160 arranged on any side of the pod 140, which may be used as a water landing gear. In FIG. 28, these flotation devices 160 are shown deflated. FIG. 34 illustrates a side view of a deflated flotation device 160. As shown in FIG. 35 and FIG. 36, the flotation device 160 engaged with the passenger pod 140 is shown inflated.

Referring FIG. 33 as another example, the flight platform 101 may have four flotation devices 160 arranged on the tops of four electric wheels 148 respectively. These flotation devices 160 may be alternatively attached to the electric wheels 148 or close to the electric wheels 148 at the other positions. In FIG. 33, these flotation devices 160 engaged with the electric wheels 148 are shown deflated. FIG. 35 and FIG. 36 illustrate inflated flotation devices 160 of the flight platform 101.

As above, a cooling fan is installed in an arm of an unmanned aerial vehicle, the cooling fan starts to work during the working period of a lift motor of the unmanned aerial vehicle, and hot airflow in the arm is exhausted through a flow field generate by the cooling fan, thereby achieving the purposes of lowering temperature in the arm and protecting equipment in the arm. Illustratively, one cooling fan is arranged below and in front of the lift motor, a wind field of the cooling fan blows towards the rear portion of the arm to form an airflow flowing backwards in the arm, and when the vertical takeoff and landing unmanned aerial vehicle is shifted to a level flight stage, the lift motor stops working, and the cooling fan stops working at the same time.

According to the technical solutions of the invention, heat dissipation in an arm of an unmanned aerial vehicle is achieved by installing a fan in a hollow interior of each of a left linear support and a right linear support of the unmanned aerial vehicle, thereby achieving the purposes of lowering temperature in the arm and protecting equipment in the arm.

FIG. 37 is a side sectional view of an unmanned aerial vehicle with a cooling system in accordance with an embodiment of the invention. Please referring to FIG. 37, a cooling system for an unmanned aerial vehicle provided by the invention comprises a hollow linear support 103A; a plurality of lift propellers 108A, 108B, and 108C which are arranged on the hollow linear support 103A; a plurality of motors 180 for driving the lift propellers 108A, 108B, and 108C, wherein the motors 180 are arranged in the hollow linear support 103A, and illustratively, each motor 180 is used for driving one lift propeller; at least one air inlet and air outlet (not shown), wherein air enters from the air inlet near the front end of the linear support 103A and flows out from the air outlet near the rear end thereof; and a fan 170 which is arranged in the linear support 103A to supply the air from an external environment to the interior of the hollow linear support.

In one embodiment, the fan is arranged at a position close to the front end of the linear support, and thus airflow A in the linear support may flow through the linear support more quickly to take away all heat in the hollow interior more quickly.

In one embodiment, the linear support is in a straight configuration which is in favor of improving the overall strength of the unmanned aerial vehicle.

In one embodiment, at least one air inlet is provided at a position close to the front end of the linear support, which is in favor of enabling the air caused by the flight movement during the flight of the unmanned aerial vehicle to enter the linear support more quickly.

In one embodiment, at least one air outlet is provided at a position close to the rear end of the linear support, and thus the airflow in the linear support may cover the entire interior of the linear support, and the heat dissipation of the entire interior of the linear support is achieved.

In an example helpful for understanding the invention, the cooling system further comprises a pod which is detachably attached to the bottom face of the unmanned aerial vehicle, wherein the pod is a passenger pod or a cargo pod. By means of the arrangement mode as above, a structure of the unmanned aerial vehicle may be flexibly adjusted; in accordance with the actual conditions, the pod may be installed when needed, and may be detached when not needed, and therefore the unmanned aerial vehicle may be flexibly used in response to different requirements, and the adaptability of the unmanned aerial vehicle is improved.

The heat dissipation in the arm of the unmanned aerial vehicle may be achieved by adopting the cooling system for the unmanned aerial vehicle provided by the invention.

Many variations and modifications may be made by those of ordinary skill in the art without departing from the scope of the appended claims. Thus, it must be understood that the illustrated embodiments are presented for the purpose of example only and should not be taken as limiting the embodiments defined by the appended claims.

Thus, the disclosed embodiments are not limited except in the scope of the appended claims. In addition, in interpreting the specification and technical solutions, all terms should be interpreted as the broadest possible manner consistent with the context. Particularly, the terms "comprise" and "comprising" should be interpreted as referring to components, assemblies, or steps in a non-exclusive manner, indicating that the referenced components, assemblies, or steps may be present, or utilized, or combined with other components, assemblies, or steps that are not expressly referenced. In addition, in the case that the specification and technical solutions refer to at least one selected from a group consisting of A, B, C,... and N, the text should be interpreted as requiring at least one element of the group, including N, rather than A plus N, or B plus N, or the like.

## Claims

1. A cooling system for an unmanned aerial vehicle, comprising:
a hollow linear support (103A; 103B);
a plurality of lift propellers (108A; 108B; 108C; 108D; 108E; 108F) which are arranged on the linear support (103A; 103B);
a plurality of motors (180) for driving the lift propellers, wherein each motor (180) is used for driving one lift propeller, and the plurality of motors (180) are arranged in the linear support (103A; 103B);
at least one air inlet (190) which is provided on the linear support (103A; 103B);
at least one air outlet (200) which is provided on the linear support (103A; 103B);
a fan (170) which is arranged in the linear support (103A; 103B) to supply air from an external environment to an interior of the hollow linear support (103A; 103B); and
wherein a diameter or width of each air inlet (190) in the at least one air inlet (190) is less than a radius of the linear support (103A; 103B).

2. The cooling system for the unmanned aerial vehicle according to claim 1, wherein the fan (170) is arranged at a position close to the front end of the linear support (103A; 103B).

3. The cooling system for the unmanned aerial vehicle according to claim 1 or claim 2, wherein the linear support (103A; 103B) is in a straight configuration.

4. The cooling system for the unmanned aerial vehicle according to any one of claims 1 to 3, wherein the at least one air inlet (190) is provided at a position close to the front end of the linear support (103A; 103B).

5. The cooling system for the unmanned aerial vehicle according to any one of claims 1 to 4, wherein the at least one air outlet (200) is provided at a position close to the rear end of the linear support (103A; 103B).

6. A vertical takeoff and landing unmanned aerial vehicle, comprising:
a left main wing (104A) and a right main wing (104B);
a left front wing (105A) and a right front wing (105B); and
a main body (102) which is engaged with the left main wing (104A) and the right main wing (104B);
whereby:
a left cooling system according to claim 1 is provided for connecting the left main wing (104A) with the left front wing (105A);
a right cooling system according to claim 1 is provided for connecting the right main wing (104B) with the right front wing (105B).

7. The vertical takeoff and landing unmanned aerial vehicle according to claim 6, wherein each of the fans (170) is arranged at a position close to the front end of each of the left linear support (103A) and the right linear support (103B).

8. The vertical takeoff and landing unmanned aerial vehicle according to any one of claims 6 to 7, wherein the two ends of each of the left linear support (103A) and the right linear support (103B) are formed as a tapered structure.

9. The vertical takeoff and landing unmanned aerial vehicle according to claim 8, wherein the air inlets (190) are located at the front ends of the left linear support (103A) and the right linear support (103B), and the air outlets (200) are located at the rear ends of the left linear support (103A) and the right linear support (103B); each of the at least one air inlet comprises a plurality of air inlets (190) in a shape of oblong, length directions of the air inlets (190) are provided along a generatrix of the tapered structure, and the plurality of air inlets (190) are spaced from one another; and each of the at least one air outlet comprises a plurality of air outlets (200) in a shape of oblong, length directions of the air outlets (200) are arranged along a generatrix of the tapered structure in a spaced manner, and the plurality of air outlets (200) are spaced from one another.

10. The vertical takeoff and landing unmanned aerial vehicle according to any one of claims 6 to 9, further comprising a detachable pod (130; 140) attached to the bottom face of the unmanned aerial vehicle (100).

11. The vertical takeoff and landing unmanned aerial vehicle according to claim 10, wherein the pod is a passenger pod (140) or a cargo pod (130).

12. The vertical takeoff and landing unmanned aerial vehicle according to any one of claims 6 to 11, wherein a rotating shaft of each of the fans (170) is perpendicular to a rotating shaft of each lift propeller in the plurality of lift propellers (108A; 108B; 108C; 108D; 108E; 108F).

13. The vertical takeoff and landing unmanned aerial vehicle according to any one of claims 6 to 12, further comprising at least one propulsion propeller (107A; 107B; 117) arranged on the unmanned aerial vehicle (100).

## Patentansprüche

1. Kühlsystem für ein unbemanntes Luftfahrzeug, umfassend:
einen hohlen linearen Träger (103A; 103B);
eine Vielzahl von Hubpropellern (108A; 108B; 108C; 108D; 108E; 108F), die auf dem linearen Träger (103A; 103B) angeordnet sind;
eine Vielzahl von Motoren (180) zum Antreiben der Hubpropeller, wobei jeder Motor (180) zum Antreiben eines Hubpropellers verwendet wird und die Vielzahl von Motoren (180) in dem linearen Träger (103A; 103B) angeordnet sind;
mindestens einen Lufteinlass (190), der auf dem linearen Träger (103A; 103B) bereitgestellt ist;
mindestens einen Luftauslass (200), der auf dem linearen Träger (103A; 103B) bereitgestellt ist;
ein Gebläse (170), das in dem linearen Träger (103A; 103B) angeordnet ist, um Luft von einer äußeren Umgebung zu einem Inneren des hohlen linearen Trägers (103A; 103B) zuzuführen; und
wobei ein Durchmesser oder eine Breite jedes Lufteinlasses (190) in dem mindestens einen Lufteinlass (190) kleiner als ein Radius des linearen Trägers (103A; 103B) ist.

2. Kühlsystem für das unbemannte Luftfahrzeug nach Anspruch 1, wobei das Gebläse (170) an einer Position nahe dem vorderen Ende des linearen Trägers (103A; 103B) angeordnet ist.

3. Kühlsystem für das unbemannte Luftfahrzeug nach Anspruch 1 oder Anspruch 2, wobei der lineare Träger (103A; 103B) in einer geraden Konfiguration ist.

4. Kühlsystem für das unbemannte Luftfahrzeug nach einem der Ansprüche 1 bis 3, wobei der mindestens eine Lufteinlass (190) an einer Position nahe dem vorderen Ende des linearen Trägers (103A; 103B) bereitgestellt ist.

5. Kühlsystem für das unbemannte Luftfahrzeug nach einem der Ansprüche 1 bis 4, wobei der mindestens eine Luftauslass (200) an einer Position nahe dem hinteren Ende des linearen Trägers (103A; 103B) bereitgestellt ist.

6. Senkrecht startendes und landendes unbemanntes Luftfahrzeug, umfassend:
einen linken Hauptflügel (104A) und einen rechten Hauptflügel (104B);
einen linken Vorderflügel (105A) und einen rechten Vorderflügel (105B); und
einen Hauptkörper (102), der mit dem linken Hauptflügel (104A) und dem rechten Hauptflügel (104B) in Eingriff steht;
wobei:
ein linkes Kühlsystem nach Anspruch 1 zum Verbinden des linken Hauptflügels (104A) mit dem linken Vorderflügel (105A) vorgesehen ist;
ein rechtes Kühlsystem nach Anspruch 1 zum Verbinden des rechten Hauptflügels (104B) mit dem rechten Vorderflügel (105B) vorgesehen ist.

7. Senkrecht startendes und landendes unbemanntes Luftfahrzeug nach Anspruch 6, wobei jedes der Gebläse (170) an einer Position nahe dem vorderen Ende von jedem des linken linearen Trägers (103A) und des rechten linearen Trägers (103B) angeordnet ist.

8. Senkrecht startendes und landendes unbemanntes Luftfahrzeug nach einem der Ansprüche 6 bis 7, wobei die zwei Enden von jedem des linken linearen Trägers (103A) und des rechten linearen Trägers (103B) als eine sich verjüngende Struktur ausgebildet sind.

9. Senkrecht startendes und landendes unbemanntes Luftfahrzeug nach Anspruch 8, wobei die Lufteinlässe (190) an den vorderen Enden des linken linearen Trägers (103A) und des rechten linearen Trägers (103B) angeordnet sind und die Luftauslässe (200) an den hinteren Enden des linken linearen Trägers (103A) und des rechten linearen Trägers (103B) angeordnet sind;
jeder des mindestens einen Lufteinlasses eine Vielzahl von Lufteinlässen (190) in einer Form von länglichen Längen umfasst, wobei Längsrichtungen der Lufteinlässe (190) entlang einer Erzeugenden der sich verjüngenden Struktur bereitgestellt sind und die Vielzahl von Lufteinlässen (190) voneinander beabstandet sind; und jeder des mindestens einen Luftauslasses eine Vielzahl von Luftauslässen (200) in einer Form von länglichen Längen umfasst, wobei Längsrichtungen der Luftauslässe (200) entlang einer Erzeugenden der sich verjüngenden Struktur in einer beabstandeten Weise angeordnet sind und die Vielzahl von Luftauslässen (200) voneinander beabstandet sind.

10. Senkrecht startendes und landendes unbemanntes Luftfahrzeug nach einem der Ansprüche 6 bis 9, ferner umfassend eine abnehmbare Gondel (130; 140), die an der Unterseite des unbemannten Luftfahrzeugs (100) angebracht ist.

11. Senkrecht startendes und landendes unbemanntes Luftfahrzeug nach Anspruch 10, wobei die Gondel eine Passagiergondel (140) oder eine Frachtgondel (130) ist.

12. Senkrecht startendes und landendes unbemanntes Luftfahrzeug nach einem der Ansprüche 6 bis 11, wobei eine Drehwelle von jedem der Gebläse (170) senkrecht zu einer Drehwelle jedes Hubpropellers in der Vielzahl von Hubpropellern (108A; 108B; 108C; 108D; 108E; 108F) ist.

13. Senkrecht startendes und landendes unbemanntes Luftfahrzeug nach einem der Ansprüche 6 bis 12, ferner umfassend mindestens einen Antriebspropeller (107A; 107B; 117), der auf dem unbemannten Luftfahrzeug (100) angeordnet ist.

## Revendications

1. Système de refroidissement pour un véhicule aérien sans pilote, comprenant :
un support linéaire creux (103A ; 103B) ;
une pluralité d'hélices de sustentation (108A ; 108B ; 108C ; 108D ; 108E ; 108F) qui sont agencées sur le support linéaire (103A ; 103B) ;
une pluralité de moteurs (180) pour entraîner les hélices de sustentation, dans lequel chaque moteur (180) est utilisé pour entraîner une hélice de sustentation, et la pluralité de moteurs (180) sont agencés dans le support linéaire (103A ; 103B) ;
au moins une entrée d'air (190) qui est prévue sur le support linéaire (103A ; 103B) ;
au moins une sortie d'air (200) qui est prévue sur le support linéaire (103A ; 103B) ;
un ventilateur (170) qui est agencé dans le support linéaire (103A ; 103B) pour fournir de l'air d'un environnement externe à un intérieur du support linéaire creux (103A ; 103B) ; et
dans lequel un diamètre ou une largeur de chaque entrée d'air (190) dans l'au moins une entrée d'air (190) est inférieur à un rayon du support linéaire (103A ; 103B).

2. Système de refroidissement pour le véhicule aérien sans pilote selon la revendication 1, dans lequel le ventilateur (170) est agencé à une position proche de l'extrémité avant du support linéaire (103A ; 103B).

3. Système de refroidissement pour le véhicule aérien sans pilote selon la revendication 1 ou la revendication 2, dans lequel le support linéaire (103A ; 103B) est dans une configuration droite.

4. Système de refroidissement pour le véhicule aérien sans pilote selon l'une quelconque des revendications 1 à 3, dans lequel l'au moins une entrée d'air (190) est prévue à une position proche de l'extrémité avant du support linéaire (103A ; 103B).

5. Système de refroidissement pour le véhicule aérien sans pilote selon l'une quelconque des revendications 1 à 4, dans lequel l'au moins une sortie d'air (200) est prévue à une position proche de l'extrémité arrière du support linéaire (103A ; 103B).

6. Véhicule aérien sans pilote à décollage et atterrissage verticaux, comprenant :
une aile principale gauche (104A) et une aile principale droite (104B) ;
une aile avant gauche (105A) et une aile avant droite (105B) ; et
un corps principal (102) qui est mis en prise avec l'aile principale gauche (104A) et l'aile principale droite (104B) ;
moyennant quoi :
un système de refroidissement gauche selon la revendication 1 est prévu pour raccorder l'aile principale gauche (104A) à l'aile avant gauche (105A) ;
un système de refroidissement droit selon la revendication 1 est prévu pour raccorder l'aile principale droite (104B) à l'aile avant droite (105B).

7. Véhicule aérien sans pilote à décollage et atterrissage verticaux selon la revendication 6, dans lequel chacun des ventilateurs (170) est agencé à une position proche de l'extrémité avant de chacun du support linéaire gauche (103A) et du support linéaire droit (103B).

8. Véhicule aérien sans pilote à décollage et atterrissage verticaux selon l'une quelconque des revendications 6 à 7, dans lequel les deux extrémités de chacun du support linéaire gauche (103A) et du support linéaire droit (103B) sont formées comme une structure conique.

9. Véhicule aérien sans pilote à décollage et atterrissage verticaux selon la revendication 8, dans lequel les entrées d'air (190) sont situées aux extrémités avant du support linéaire gauche (103A) et du support linéaire droit (103B), et les sorties d'air (200) sont situées aux extrémités arrière du support linéaire gauche (103A) et du support linéaire droit (103B) ;
chacune de l'au moins une entrée d'air comprend une pluralité d'entrées d'air (190) sous une forme oblongue, des directions de longueur des entrées d'air (190) sont prévues le long d'une génératrice de la structure conique, et la pluralité d'entrées d'air (190) sont espacées les unes des autres ; et chacune de l'au moins une sortie d'air comprend une pluralité de sorties d'air (200) sous une forme oblongue, des directions de longueur des sorties d'air (200) sont agencées le long d'une génératrice de la structure conique d'une manière espacée, et la pluralité de sorties d'air (200) sont espacées les unes des autres.

10. Véhicule aérien sans pilote à décollage et atterrissage verticaux selon l'une quelconque des revendications 6 à 9, comprenant en outre une nacelle détachable (130 ; 140) fixée à la face inférieure du véhicule aérien sans pilote (100).

11. Véhicule aérien sans pilote à décollage et atterrissage verticaux selon la revendication 10, dans lequel la nacelle est une nacelle de passagers (140) ou une nacelle de chargement (130).

12. Véhicule aérien sans pilote à décollage et atterrissage verticaux selon l'une quelconque des revendications 6 à 11, dans lequel un arbre de rotation de chacun des ventilateurs (170) est perpendiculaire à un arbre de rotation de chaque hélice de sustentation dans la pluralité d'hélices de sustentation (108A ; 108B ; 108C ; 108D ; 108E ; 108F).

13. Véhicule aérien sans pilote à décollage et atterrissage verticaux selon l'une quelconque des revendications 6 à 12, comprenant en outre au moins une hélice de propulsion (107A ; 107B ; 117) agencée sur le véhicule aérien sans pilote (100).
